Europäisches Patentamt

European Patent Office

Office européen des brevets

(11) Publication number: 0 339 158
A2

## EUROPEAN PATENT APPLICATION

(21) Application number: 88311360.7

(51) Int. Cl.⁴: H04N 1/46

(22) Date of filing: 30.11.88

(30) Priority: 27.04.88 JP 102450/88

(43) Date of publication of application:
02.11.89 Bulletin 89/44

(84) Designated Contracting States:
DE GB IT NL

(71) Applicant: KONICA CORPORATION
No. 26-2, Nishishinjuku 1-chome Shinjuku-ku
Tokyo(JP)

(72) Inventor: Hattori, Tuyosi
c/o Konica Corporation 1, Sakuramachi
Hino-shi Tokyo(JP)
Inventor: Ohya, Yukio
c/o Konica Corporation 1, Sakuramachi
Hino-shi Tokyo(JP)
Inventor: Ohtani, Hirofumi
c/o Konica Corporation 1, Sakuramachi
Hino-shi Tokyo(JP)
Inventor: Tanaka, Masanao
c/o Konica Corporation 1, Sakuramachi
Hino-shi Tokyo(JP)
Inventor: Matsuzaka, Syoji
c/o Konica Corporation 1, Sakuramachi
Hino-shi Tokyo(JP)

(74) Representative: Harrison, Michael Robert et al
Urquhart-Dykes & Lord 91 Wimpole Street
London W1M 8AH(GB)

(54) Color image forming apparatus and color image forming system.

(57) Disclosed is an apparatus and system for forming a color image which forms color image by modulating beams of light having different wavelength from plural light sources with use of image signal respectively, conducting a scanning exposure on a light-sensitive material by use of the modulated beams of light to form a latent image thereon and developing the latent image, wherein the light-sensitive material is a heat-developable light-sensitive material, the latent image is developed by heat developing treatment, the maximum intensity wavelength ($\lambda$max) of spectral distribution of the light intensity of one of the light sources is 560 nm $\leq \lambda$ max $\leq$ 620 nm, and the half width (W) of the spectral distribution is W $\leq$ 20 nm.

Since the color image forming apparatus of this invention uses yellow light in place of blue light among plural lights for exposure without using blue light, stable and compact light source can be used as a light source to be combined with other light sources for image forming, the light source becomes to be long life, in addition, combining with a heat-developable light-sensitive material, the apparatus becomes small and low in cost and the formed image outputted from the computer becomes high in quality, etc.

FIG. 1

## Color image forming apparatus and color image forming system

### BACKGROUND OF THE INVENTION

This invention relates to an apparatus for forming color image of high quality which is conducted by scanning exposure with use of a beam of light modified by image data signal on a heat-developable photosensitive material to carry out heat development and a color image forming system therefor.

In the prior art, scanning type color image forming apparatuses such as of thermal transfer system and ink jet system have been known. Since, however, these apparatusses were insufficient in resolution, reproduction of tone (delicate tone) and reproduction of texture, high quality images could not be obtained.

For obtaining high quality image which satisfy the above-mentioned requirements, most preferred is a method in which exposure is carried out by scanning exposure system on a silver halide light-sensitive material. In the case where the usual light-sensitive material such as a color film and a color paper is used as a silver halide light-sensitive material, it is required to use water and chemicals such as developer in the step of color developing, resulting in difficulty of handling, and taking excessive procedures such as supplement, and making the apparatus large. However, by using a heat-developable light-sensitive material, it is no more required to use water or chemicals when the color development is carried out, and miniturization of the apparatus is accomplished as it requires only heat developing treatment by applying heat.

The image forming system utilizing the heat-developable light-sensitive material in which a diffusible dye is released or formed by heat development and then the dye is transferred to obtain color image is excellent in stability and sharpness of the image, and in easiness and fastness of the treatment. The heat-developable light-sensitive material of this transfer system and image forming method therefor have been described in the specification of each of Japanese Unexamined Patent Publications Nos. 12431/1984, 159159/1984, 181345/1984, 229556/1984, 2950/1985, 52643/1986, 61158/1986, 61157/1986, 180550/1984, 132952/1986 and 139842/1986, and US Patents Nos. 4,595,652, 4,590,154 and 4,584,267, etc.

For obtaining color image by carrying out scanning exposure, original color image signal is subjected to color resolving into three colors of RGB (red, green and blue), the color image data are used for modifying light intensity which are different in wave length, and these modulated beam of light are used for scanning exposure of the heat-developable light-sensitive material to conduct heat development. The heat-developable light-sensitive material used herein may include those which receive plural beams of light having been modulated in intensities and conduct color-foeming in a suitable manner.

On the other hand, known as light sources which can be used for exposure scanning are the combination of white light sources such as glow lamps, xenon lamps, mercury lamps and tungsten lamps with filters; light-emitting diodes, gas lasers, solid lasers, semiconductor lasers, etc.

In general, lasers which can emit coherent beam of light are often used as the light sources in view of the high luminance, focusing performance, monochromatic sensitivity, etc. Specifically, the blue light source includes a He-Cd gas laser (441.6 nm) and an $Ar^+$ gas laser (488.0 nm); the green light source, an $Ar^+$ gas laser (514.5 nm), a He-Ne gas laser (543.5 nm); and the red light source, a He-Ne gas laser (632.8 nm).

However, the blue light sources have problems such as unstable, expensive, short in life and large in scale of the unit.

### SUMMARY OF THE INVENTION

The present invention has been accomplished in view of such situation to provide a color image forming apparatus and a color image forming system in which all of light sources used therein are stable, long life, compact and inexpensive and by which color images of high image quality can be obtained at the same time.

The present invention is an apparatus and a system for forming a color image which forms color image by modulating beams of light having different wavelength from plural light sources with use of image signal respectively, conducting a scanning exposure on a light-sensitive material by use of the modulated beams of light to form a latent image thereon and developing the latent image, wherein the light-sensitive material is a heat-developable light-sensitive material, the latent image is developed by heat developing treatment, the maximum intensity wavelength ($\lambda$max) of spectral distribution of the light intensity of one of the light sources is 560 nm $\leq \lambda$max $\leq$ 620 nm, and the half width (W) of the spectral distribution is W $\leq$ 20 nm.

## BRIEF DESCRIPTION OF THE DRAWINGS

Fig. 1 is a block diagram of a color image forming apparatus of an example according to this invention.

Figs. 2 to 9 are block diagrams showing other examples of this invention.

## DESCRIPTION OF THE PREFERRED EMBODIMENTS

Light sources for the optical scanning exposure apparatus include He-Ne gas lasers being inexpensive and excellent in stability, life and compactness, which are capable of emitting light of 543.5 nm, 594.5 nm, 611.9 nm and 632.8 nm.

The light of 543.5 nm is green light and the light of 632.8 nm is red light, to which a green-sensitive layer and a red-sensitive layer of silver halide emulsion layers have sensitivities. Usually the heat-developable light-sensitive color photographic material contains another layer of a blue-sensitive layer having sensitivity to blue light.

However, as described above, the light source of beam of blue light which sensitize the blue sensitive layer has various problem.

Accordingly, in this invention, the above objects can be accomplished by using as an object a light-sensitive material containing a yellow-sensitive layer mainly having sensitivity to the light of 594.1 nm or 611.9 nm in place of the blue-sensitive layer, and using, for sensitizing it, a light source (a yellow light source) which can emit a beam of light having the maximum intensity wavelength ($\lambda$max) of spectral distribution of the light intensity in the range of 560 nm $\leq \lambda$max $\leq$ 620 nm, and the half width (W) of the spectral distribution in the range of W $\leq$ 20 nm.

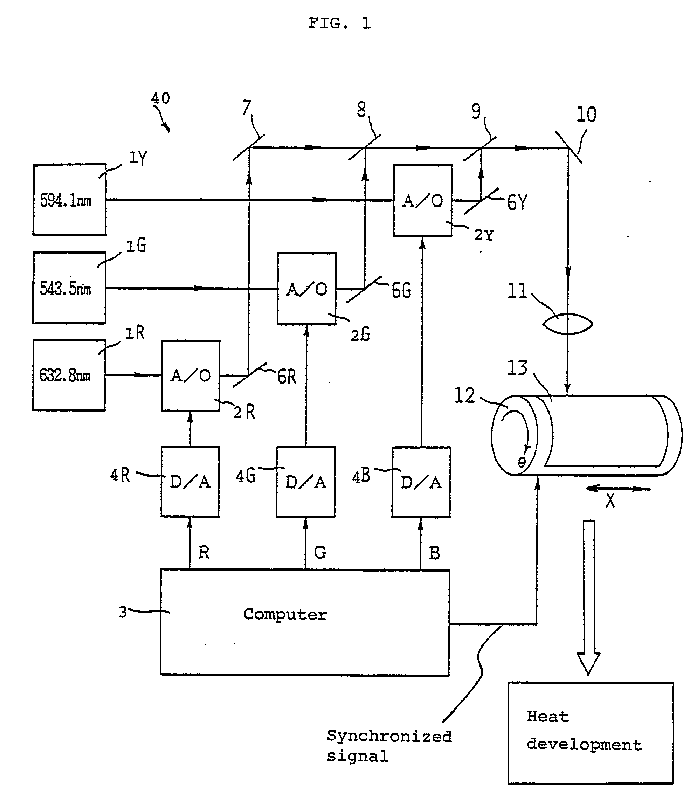

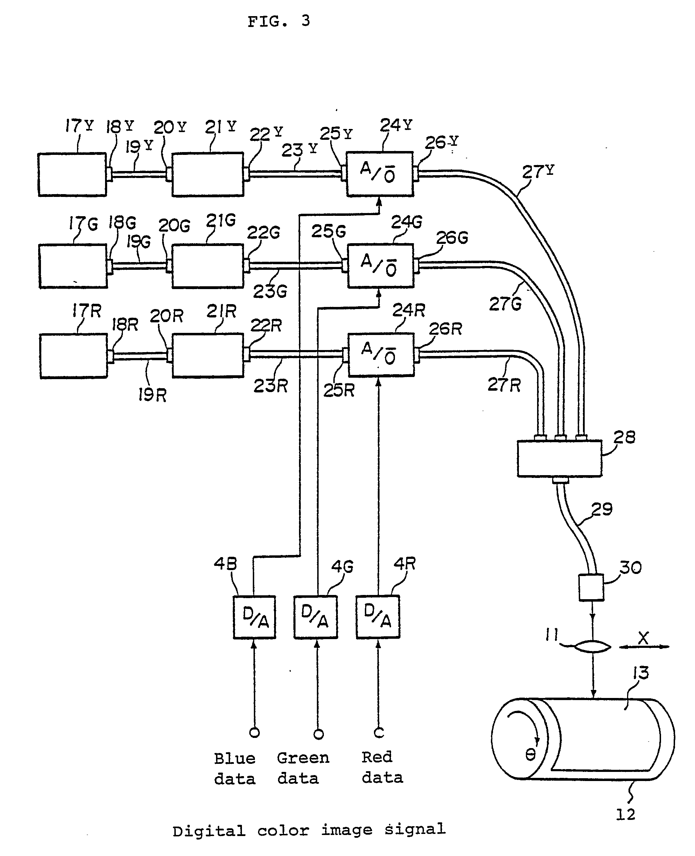

Hereinbelow, examples of this invention will be described. In Fig. 1, 3 denotes a computer, 40 a scanning exposure color image forming section which receives an output from the computer 3 and forms image.

The computer 3 appropriately treats color image signals produced therein (signals produced by computer graphics), color image signals inputted from a color image reading apparatus as an outer apparatus, and color image signals, etc. inputted from a magnetic tape, a magnetic disc, an optical disc, a semiconductor memory, etc., and outputs these treated signals in the form of digital signal of red data R, green data G and blue data B. The image processing possessed by the computer may include particular treatments, for example, processing for obtaining desired sharpness (such as Laplacean operation), processing for removing noises, tone transformation such as gradation transformation or color transformation, and affein transformation (such as enlargement, reduction, rotation, parallel movement, trimming, and mapping synthesis), as well as any special processing such as layout of two or more images, impartation of characters or signs, and also soft focusing and other treatments. In the case where the image processing is not necessary, the signals from the above various apparatuses may be transferred directly to the image forming section without passing it through the computer 3.

Next, in the color image forming section 40, numerals 4R, 4G and 4B are respectively D/A convertors connected to the side of output of the computer 3 and convert respective digital signals of RGB from the computer 3 to analogue signals, then transfer the converted signals to optical modulators 2R, 2G and 2Y.

Numerals 1R, 1G and 1Y are laser light sources which put beams of light in these optical modulators 2R, 2G and 2Y, respectively, and each of these laser light sources are constituted by He-Ne gas laser devices. The laser device 1Y emits yellow laser beam of the wavelength of 594.1 nm, the laser device 1G, green laser beam of the wavelength of 543.5 nm, and the red laser device 1R, red laser beam of the wavelength of 632.8 nm. These laser beams are respectively put in the optical modulators 2Y, 2G and 2R and their intensities are respectively modulated depending on the image signals of blue data B, green data G and red data R having been input from the D/A convertors 4R, 4G and 4B.

Numerals 6Y, 6G and 6R are reflection mirrors provided at the side of the output of the optical modulators 2Y, 2G and 2Y and change an optical axis of the modulated laser beams. The modulated laser beams of each color which have been reflected by the reflection mirrors 6Y, 6G and 6B are arranged by the reflection mirror 7, dichroic mirrors 8 and 9 in their optical axises to have co-axis, focused and put in the direction of a drum 12 through a reflection mirror 10 and a lens 11.

The drum 12 is constituted so that it may be rotated in a constant speed in the direction of arrow $\theta$ - (primary scanning) and concurrently moved to the direction of arrow X (secondary scanning). The primary scanning and secondary scanning are carried out according to the synchronized signals from the computer 3.

The numeral 13 denotes a heat-developable light-sensitive material rolled around the drum 12. The light-sensitive material 13 comprises three light-sensitive layers containing dye providing substance and silver halide on a support and is so constituted that one layer of these layers is a yellow sensitive layer containing a yellow coupler, one of other layers is a green-sensitive layer containing a magenta coupler and an other one layer is a red-sensitive layer containing a cyan coupler.

As described above, in the color image forming of this example, the blue optical beam usually used for exposure scanning is not used, but the yellow optical beam is used. The yellow optical beam can easily be accomplished by using a stable and enexpensive light source. Also, since the heat-developable light-sensitive material is sensitized by carrying (modulating) the blue image data on the beam of yellow light, the heat-developable light-sensitive material thereof is provided with a yellow-sensitive layer having sensitivity to yellow light in place of the blue-sensitive layer and the yellow-sensitive layer is made to include a yellow dye coupler therein, whereby images of blue data output from the computer 3 is reproduced in the yellow-sensitive layer.

As the combination of light sources, the following constitutions containing yellow light source are considered in addition to the combination of (1) green light, yellow light and red light. (2) green light, yellow light and infrared light, (3) yellow light, red light and infrared light, and (4) yellow light and two kinds of infrared light having different wavelengths.

From the viewpoint that stable and inexpensive light sources can be used, preferred is a combination comprising the green light, yellow light and red light in (1) as described in the example. Accordingly, as the heat-developable light-sensitive material, preferred is a heat-developable light-sensitive material comprising at least three layers having sensitivity to green light, yellow light and red light corresponding to the above conception.

Preferred as the yellow light source used in this invention may include, other than gas lasers, lasers such as solid lasers, semiconductor lasers or the like capable of emitting a laser beam of narrow output light intensity distribution.

There may be also available the combination of various lasers with wavelength-converting devices, and preferred in view of the compactness is the combination of an infrared semiconductor laser with an SHG device.

Usable as light sources for the green light, red light and infrared light are any of the combination of white light sources with filters, the combination of light-emitting diodes, gas lasers, solid lasers, semiconductor lasers or all sorts of lasers with wavelength-converting devices.

As specific examples, the green light sources include, other than those used in the above example, an $Ar^+$ gas laser (514.5 nm), a $Kr^+$ gas laser (520.8 nm), a combination of an infrared semiconductor laser with an SHG device, etc.; the red light sources include, other than those described in the above example, a $Kr^+$ gas laser (647.1 nm), semiconductor lasers (647.1 nm), (678 nm), (750 nm), (780 nm), etc.; and infrared light sources include semiconductor lasers (810 nm), (830 nm), (1,030 nm), (1,300 nm) and light-emitting diodes (peak wavelength: 890 nm), (peak wavelength: 940 nm), etc..

Since, in this example, all of the light sources of three colors used are all He-Ne gas laser devices, such a system is available that one beam He-Ne gas laser device is color resolved by use of a dichroic mirror and the like to obtain three oscillation lines (543.5 nm, 594.1 nm and 632.8 nm).

In this invention, such an embodiment is available that a frame memory or memories are held before the D/A converters and the image signals are outputted after they are once stored in the frame memories. The signals outputted from the computer 3 may be the analogue signals. In such case, it is not neccessary to provide the D/A conventors.

In this invention, light-source-stabilizing units such as light feedback units, light feed forward units or combined units thereof may optionally be mounted between the light source and the optical modulators.

Using optical fibers in place of flying light beams in space as in the example may preferably improve the maintenance, desirably. For examples, in Fig. 1, it is necessary to arrange the angle of mount and the spatial position of each devices so that each beam from the laser light sources 1Y, 1G and 1R is accurately put in the light-receiving portion of the optical modulators 2Y, 2G and 2R. For the optical axis adjustment and synthesis with use of mirrors, it is also necessary to set accurately the angle of mount and the spatial position. For this reason, respective elements of the optical system requires an optical axis adjustment structure which is good in accuracy, a base of rigid structure and a means for fixing to the base, resulting in the apparatus of high cost and large size. Further, in the adjustment of the optical axis adjustment structure, it requires much labour and time, because the adjustment of the direction of the optical axis and the spatial position of each element of the optical system are complicated, for example, a change of the optical axis of one position for change of specification or maintenance lead to readjustment of the optical axis of other elements in the optical system.

Accordingly, the color image forming system having a unit constitution in which respective elements of optical system are connected by optical fibers is preferable, for the first purpose of giving a color image forming system by which adjustment of the optical axis and maintenance thereof can be made easily and arrangement of the optical system is desirably made to make compactness of the optical system feasible, and for the second purpose of providing a color image forming system by which image forming of high quality is made feasible.

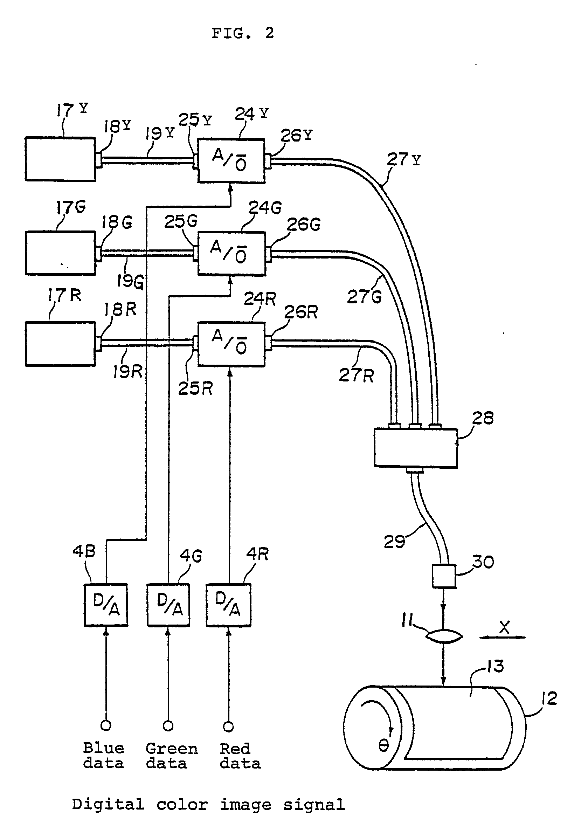

Fig. 2 is a view showing one example of the construction in which optical fibers are provided for the system of this invention. In this example, the optical fibers are applied to the apparatus for recording digital image data on a heat-developable light-sensitive material rolled around the drum. In this figure, light source units 17Y, 17G and 17R are each provided with optical fiber connectors 18Y, 18G and 18R as a light output terminal. Optical fibers 19Y, 19G and 19R whose each one terminal is connected to each of connectors 18Y, 18G and 18R so as to take out the optical output. Optical modulating section units 24Y, 24G and 24R are each provided with optical fiber connectors 25B, 25G and 25R as an optical input terminal. One terminal of each of the optical fibers 19Y, 19G and 19R is connected to the connectors respectively for receiving each optical input from the light source section units 17Y, 17G and 17R. The optical modulating section units 24Y, 24G and 24R are constituted so that they modulate the inputted light according to the modulating signals of each color given by the D/A convertors 4B, 4G and 4R, and then the optical outputs as a result of the modulating treatment are each taken out from the optical fiber connectors 26Y, 26G and 26R. Respective optical outputs from the optical modulating section units 24Y, 24G and 24R are each taken in an optical beam synthesizing unit 28 as an each input through optical fibers 27Y, 27G and 27R. The optical output synthesized by the optical beam synthesizing unit 28 is introduced to an optical connector 30 through an optical fiber 29. The optical output from the optical connector 30 is introduced to a lens 11, and then focused through the lens 11 and irradiated on a heat-developable light-sensitive material rolled around the drum 12. The drum 12 is rotated in a constant speed in the direction of arrow $\theta$ (primary scanning) and concurrently moved to the direction of arrow X (secondary scanning), whereby image printing is effected on the heat-developable light-sensitive material.

Fig. 3 shows other constitutional example in which optical fibers are used for the system of this invention. The same positions as in Fig. 2 are denoted with the same numerals as in Fig. 2 for avoiding overlap of explanation.

Those being different from the structure shown in Fig. 2 are to provide light-source-stabilizing units 21Y, 21G and 21R between the light source units 17Y and 24Y, 17G and 24G and 17R and 24R, respectively. The light-source-stabilizing units 21Y, 21G and 21R are each provided with optical fiber connectors 20Y, 20G and 20R as a light input terminal and are each provided with optical fiber connectors 22Y, 22G and 22R as a light output terminal. The light-source-stabilizing units 21Y, 21G and 21R are preferably provided, because it can make the output of high image quality feasible by the optical feed back, optical feed forward, etc.

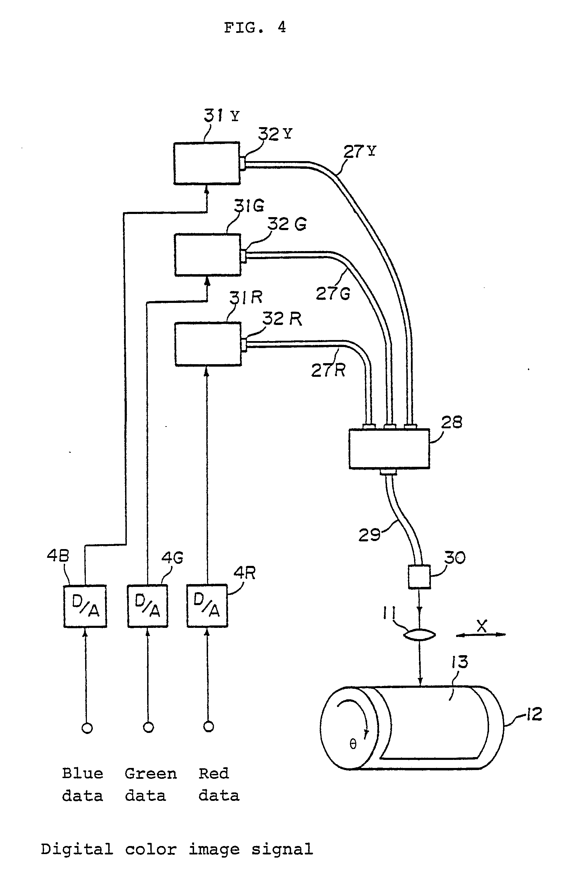

Fig. 4 shows other constitutional example in which optical fibers are used for the system of this invention. The same positions as in Fig. 3 are denoted with the same numerals as in Fig. 3 for avoiding overlap of explanation.

In this figure, units 31Y, 31G and 31R are those in which the light source units 17Y, 17G and 17R, the light-source-stabilizing units 21Y, 21G and 21R and the optical modulating units 24Y, 24G and 24R which are shown in Fig. 3 are arranged into one unit construction for each color. That is, units 31Y, 31G and 31R each comprise the light source sections, the light-source-stabilizing sections and the optical modulating sections. Units 31Y, 31G and 31R may of course be made in the unit construction comprising the light source sections and the optical modulating sections.

The respective parts may also more preferably be made into solids by use of optical waveguides, as thereby the number of the parts can be reduced and further mass production becomes possible to lower the cost.

The optical modulators each include electric optical modulators, acoustic optical modulators (AOM), waveguide type modulators (Japanese Unexamined Patent Publication No. 94823/1987) and loop type optical modulators (Japanese Unexamined Patent Publication No. 94821/1987). Also in this invention, in instances in which the semiconductor lasers or diodes are used as the light sources, the optical modulation may preferably be effected by direct current modulation without providing any optical modulators, as thereby the number of parts can be reduced.

The optical scanning in this invention may be made by the method of the combination mentioned below.

|     |     | Primary | Secondary |
| --- | --- | --- | --- |
| (a) | Rotation of drum | Galvanometer |
| (b) | Rotation of drum | Movement of objective lens (Japanese Patent Publication No. 11062/1984) |
| (c) | Galvanometer | Galvanometer (Japanese Unexamined Patent Publication No. 4071/1980) |
| (d) | Galvanometer | Conveyance of roll light-sensitive materials |
| (e) | Polygon | Galvanometer |
| (f) | Polygon | Conveyance of roll light-sensitive materials (Japanese Patent Publication No. 11062/1984) |

In place of the galvanometer, resonant scanners having the same functions may also be available. In the instance where the direct current modulation is effected by using semiconductor lasers or light-emitting diodes, the light sources themselves may be moved with movement of the objective lens in (b).

Semiconductor laser arrays or light-emitting diode arrays may also be used as light sources. In this instance, the scanning may comprise one, and the array may be scanned or the heat-developable light-sensitive material may be scanned. The scanning of the heat-developable light-sensitive material in this instance may comprise any of the rotation of the drum or conveyance of the roll light-sensitive material. In this invention, the scanning may be made by moving light or a heat-developable light-sensitive material, and it means relative movement of light to the heat-developable light-sensitive material. Of these instances, in an instance where the image formation is carried out in a large quantity and high speed, preferred are (d) and (f) where the roll heat-developable light-sensitive materials are used.

In the instance where a sheet light-sensitive material is used as the heat-developable light-sensitive material, preferred are (a), (b), (c) and (e). More preferred to make the speed higher are (c) and (e), and particularly preferred is (e).

In place of the above galvanometer or polygon, also preferred is to use solid scanners as exemplified by an optical scanner which generates elastic surface waves in an optical waveguide (Japanese Unexamined Patent Publication No. 75622/1987) or an optical scanner comprising a laminated material with a contiguous layer in an optical waveguide, an energy-applying means, and a drive circuit (Japanese Unexamined Patent Publication No. 83727/1987), by which miniaturization of the apparatus can be made possible.

As the above scanning means, a linear motor may preferably be used as it can constitute the scanning exposure means which is inexpensive and does not require lumbersome handling such as minute adjustment and by which scanning can be made with high accuracy. For example, in Figs. 1 and 2, the lens 11 is moved by the linear motor in the direction of the arrow $\theta$ (secondary scanning), by which image printing is carried out on the heat-developable light-sensitive material 13.

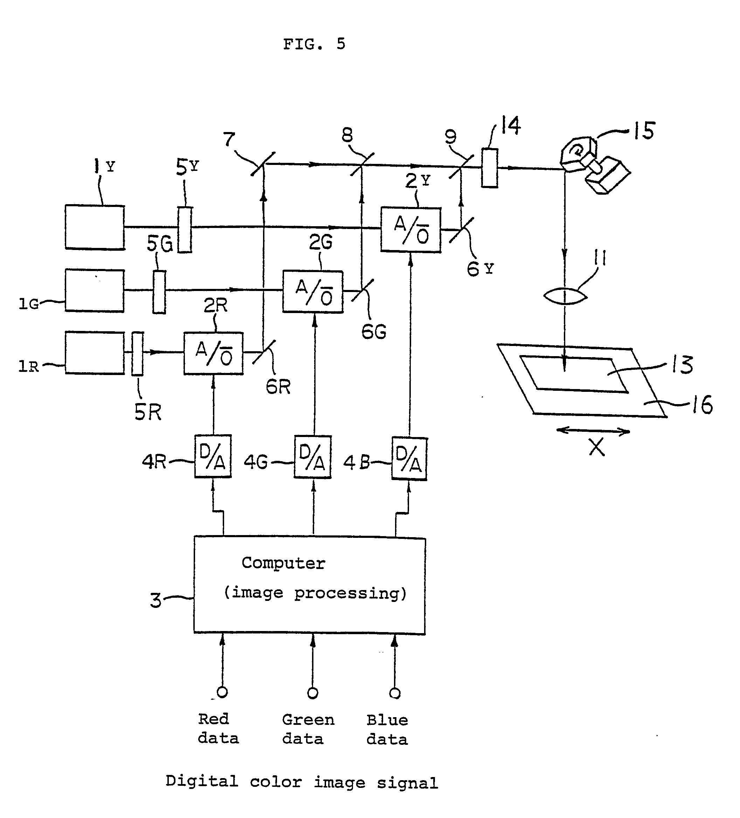

Fig. 5 is a block structural view showing other example of this invention. An optical beam produced by an optical beam producing device 14 is reflected by a polygon 15, and is further irradiated on the heat-developable light-sensitive material 13 held on a light-sensitive material holding member 16. The polygon 15 is rotated in a constant speed (primary scanning) and concurrently the light-sensitive material holding member 16 is moved in the direction of the arrow X (secondary scanning) by the linear motor. Numerals 5Y, 5G and 5R are the light-source-stabilizing devices.

In the case of color image forming system which comprises a rewritable recording means for recording look up table (hereinafter sometimes abbreviated to LUT) for image data conversion and an interface for conducting connection with an outer signal for rewriting the look up table which has been recorded or stored in said recording means; or in the case of color image forming system in which exposure is conducted on a heat-developable light-sensitive material with use of scanning exposure apparatus which includes therein a rewritable recording means for recording a look up table for iamge data conversion and a computer connected to said recording means for rewriting the look up table recorded or stored in the recording means, the following advantages can preferably be observed. In such cases, rewriting of LUT can be made easily and also speedy according to the properties of the inputted image, properties of the light-sensitive material to be outputted, fluctuation of the light-sensitive material in the steps of processing. Also, the system becomes small and inexpensive thereby. Also, direct output from the medium such as magnetic tape can easily be made through off-line.

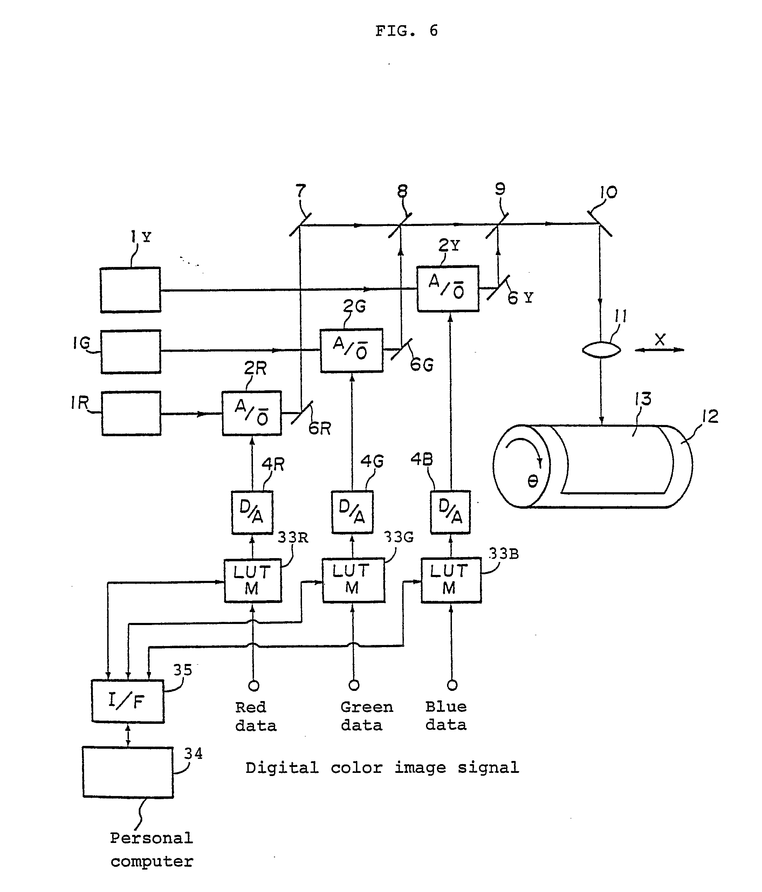

Fig. 6 is an example of this invention in which LUT is used. Blue data, green data and red data resolved by the optical modulators 2Y, 2G and 2R (beam intensity modulation is conducted accoridng to digital color image signal, blue data, green data and red data) are each subjected to data conversion in recording means 33B, 33G and 33R which record or store look up table (LUT) for image data conversion.

The blue data, green data and red data having been data converted are each subjected to D/A conversion in the D/A convertors 4B, 4G and 4R and then be transferred to the optical modulators 2Y, 2G and 2R.

The beams of light of each color having been modulated by the optical modulators 2Y, 2G and 2R are changed in optical axis by the reflection by use of mirrors 6Y, 6G and 6R, respectively, and the beam reflected by the mirror 6R is changed in optical axis to the side of the dichroic mirror 8 through the mirror 7, the synthesis of this beam with the beam reflected by the mirror 6G is carried out by use of the dichroic mirror 8, and the synthesized beam is further synthesized with the reflected beam from the mirror 6Y by using the dichroic mirror 9. The beam synthesized by these mirrors is changed in optical axis by the mirror 10, further focused through the lens 11, and irradiated on the heat- developable light-sensitive material 13 rolled around the drum 12. The drum 12 is rotated in a constant speed in the direction of the arrow $\theta$ - (primary scanning) and concurrently the lens 11 is moved in the direction of the arrow X (secondary scanning), whereby image printing is carried out on the heat-developable light-sensitive material 13.

To the recording means 33B, 33G and 33R in this invention, rewritable RAMs (random access memory) may be applied.

In the case where LUT of the recording means 33B, 33G and 33R is changed due to change of properties of the image inputted and of properties of the light-sensitive material to be outputted, or fluctuation in the step of processing of the light-sensitive material, such a change can readily be made with speed by use of a small personal computer 35 connected to the apparatus through an interface 35.

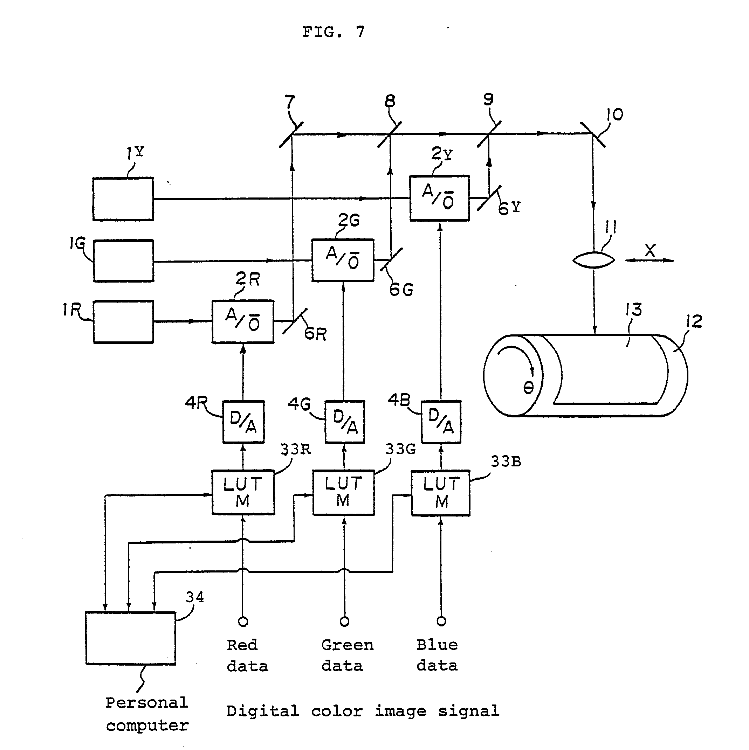

In Fig.6, the system of this invention is constituted to have a structure where the personal computer 34 outside the system is connected thereto. However, as shown in Fig. 7, such a system may be taken that the personal computer 34 is provided in the system so as to be directly connected to the recording means 33B, 33G and 33R as a matter of course.

In place of the personal computer, those being small, inexpensive and easy in handling, for example, a micro computer and the like may be used.

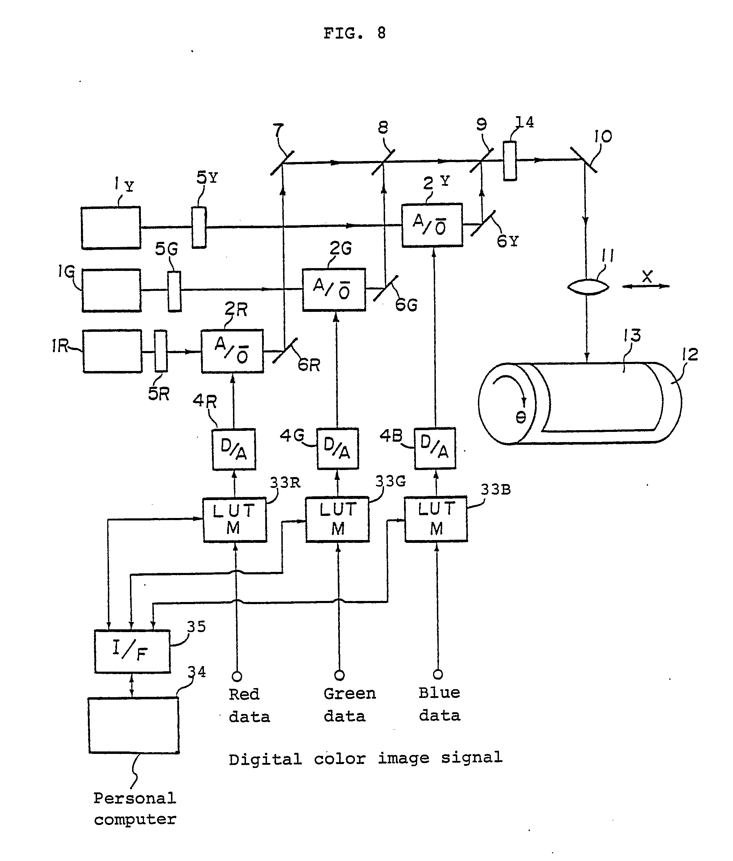

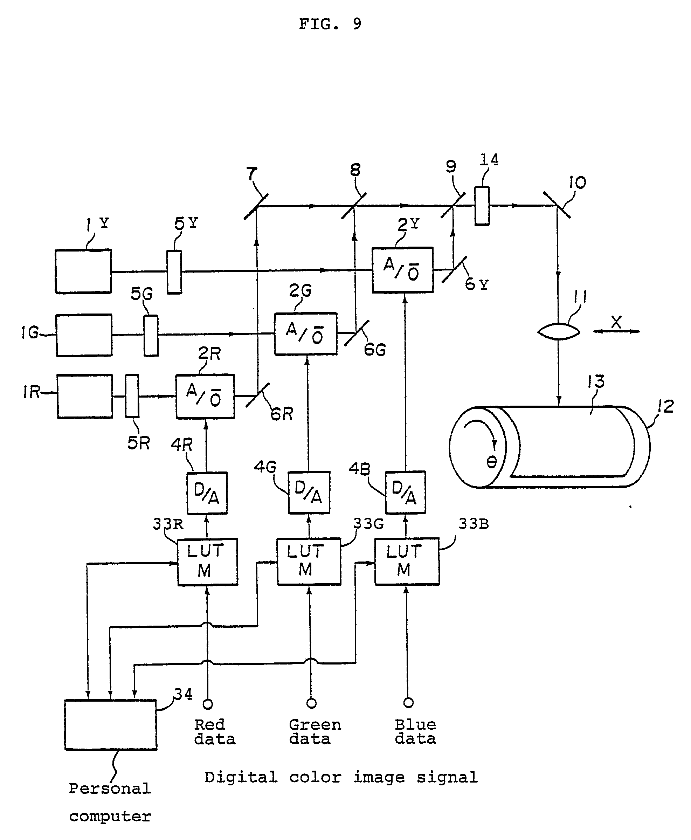

Figs. 8 and 9 each show examples of this invention in which LUT is used and block structural views of apparatuses for recording digital image data on heat-developable light-sensitive materials rolled around the drums. Beams of light emitted from the laser light sources 1Y, 1G and 1R are put in the optical modulators 2Y, 2G and 2R through the light-source-stabilizing devices 5Y, 5G and 5R, and then the beams are subjected to beam intensity modulation in the optical modulators 2Y, 2G and 2R by applying modulation signals of each color from the D/A convertors 4B, 4G and 4R. Digital color image signals are subjected to data conversion in the recording means 33B, 33G and 33R which record LUT for image data conversion and then transferred to the D/A modulators 4B, 4G and 4R.

Beams of light of each color modulated by the optical modulators 2Y, 2G and 2R are changed in optical axis by the reflection by use of the mirrors 6Y, 6G and 6R, respectively, the beam of light reflected by the mirror 6R is changed in optical axis to the side of the dichroic mirror 8 through the mirror 7, the changed beam is synthesized with the reflected beam from the mirror 6G by use of the dichroic mirror 8, and the synthesized beam is further synthesized wiht the reflected beam from the mirror 6Y by use of the dichroic mirror 9. The beam of light synthesized by these mirrors are formed in beam by use of an optical beam forming device 14 which is composed of, for example, the combination of an aperture and a colimeter, and further focused through the lens 11, and irradiated on the heat-developable light-sensitive material 13 roiloed around the drum 12. The drum 12 is rotated in a constant speed in the direction of the arrow $\theta$ - (primary scanning) and concurrently the lens 11 is moved in the direction of the arrow X (secondary scanning), whereby image printing is carried out on the heat-developable light-sensitive material.

The heat-developable light-sensitive material of this invention can be obtained by coating on a support materials containing, for example, dye providing substances, silver halides and organic silver salts with hydrophilic binders as a binder and drying it, and may be preapred by the methods described in, for example, Japanese Patent Application Nos. 219744/1987, 272851/1987, etc.

Next, as compared with the instance where the heat-developable light-sensitive material comprises a blue-sensitive layer, a green-sensitive layer and a red-sensitive layer, in the case where the yellow-sensitive layer is contained as in this invention, the distance of the light-sensitive wavelengths between the respective

7

layers become shorter, bringing about a possibility of color mixing. Since, however, the light sources are monochromatic, the color mixing can be prevented by effecting spectral sensitization in which the form of spectral sensitivity distribution and the sensitivity balance have been so controlled that sufficient differences in sensitivity can be taken between the light-sensitive layers corresponding to the respective wavelengths of light sources.

In this invention, the maximum intensity wavelength of the spectral distribution of the wavelength to be used as the yellow beam ( $\lambda_{Ymax}$ nm) is defined in the range of 560 nm $\leq \lambda_{Ymax} \leq$ 620 nm and the half width (W nm) of the spectral distribution is defined as W $\leq$ 20 nm.

The $\lambda_{Ymax}$ (nm) of the yellow-sensitive silver halide emulsion layer may be satisfactory if it is 560 nm $\leq \lambda_{Ymax} \leq$ 620 nm, but, in view of the separation of the light-sensitive wavelengths of the respective light-sensitive layers, it is particularly preferred to make the spectral sensitization so that the $\lambda_{Ymax}$ may be 580 nm $\leq \lambda_{Ymax} \leq$ 600 nm.

Since also the heat-developable light-sensitive material of this invention does not require the blue-sensitive silver halide emulsion layer, it becomes possible to use the blue light as safe light if the sensitivity to the blue light is sufficiently lowered, bringing about the merit that the light-sensitive material becomes very easy to handle. Available as methods therefor is a method in which a filter layer to intercept the blue light is provided at an upper layer than all of the light-sensitive layers, or a method in which a silver chloride emulsion having a very low specific sensitivity in the visible region is used as a silver halide emulsion.

The heat-developable light-sensitive material is prepared by incorporating a yellow dye providing substance, a magenta dye providing substance and a cyan dye providing substance in at least three light-sensitive layers having sensitivities to the three kinds of light having different wavelengths (in the above example, a red-sensitive layer, a yellow-sensitive layer and a green-sensitive layer). The three kinds of light having different wavelengths refer to yellow light and two kinds of light selected from green light, red light and infrared light.

The combination of the color sensitivity of the layer and the dye providing substances may optionally be made and is not limitative to the above examples. It is possible to use the combination of, for example, the red-sensitive layer and the yellow dye providing substances, the yellow-sensitive layer and the magenta dye providing substances, and the green-sensitive layer and the cyan dye providing substances.

The heat-developable light-sensitive material of this invention has a light-sensitive layer (yellow-sensitive silver halide emulsion layer) whose maximum sensitivity wavelength ($\lambda_{Ymax}$ (nm)) of spectral sensitivity distribution is 560 nm $\leq \lambda_{Ymax} \leq$ 620 nm as described above. In order to impart the maximum sensitivity wavelength of spectral sensitivity distribution to the above wavelength region, a sensitizing dye agreeable with the purpose is selected from known sensitizing dyes and added to the silver halide to carry out the spectral sensitization.

The amount for adding the sensitizing dye is not limitative, but the sensitizing dye may preferably be added in an amount of from $10^{-9}$ to $10^{-12}$ mol per mol of silver halide.

Also in respect of the heat-developable light-sensitive material (the green-sensitive layer, red-sensitive layer and infrared-sensitive layer) other than the yellow-sensitive layer, the sensitizing dyes are appropriately selected from known sensitizing dyes so as to impart the maximum sensitivity wavelength of spectral sensitivity distribution to the intended light-sensitive wavelength regions in the same manner as in the above.

On the other hand, usable as silver halides in the silver halide emulsion used in the light-sensitive material of this invention are any of silver bromide, silver iodobromide, silver chlorobromide, silver chloride, etc. which are used in conventional silver halide emulsions.

The heat-developable light-sensitive material of this invention can be developed only by heating at the temperature between usully 80 to 200 °C, preferably 100 to 170 °C after the scanning exposure. The exposure time is between 1 to 180 minutes, preferably 1.5 to 130 minutes, and is appropriately determined by the temperature. The diffusible dyes produced accompanying with the heat development is preferably transferred to an image-receiving layer at the same time with the heat development by adhering the image-receiving layer of the image-receiving material when the heat development is done. In this instance, adhering may be made after supplying water to the image-receiving material or the light-sensitive material to carry out the development. Preliminary heating may be made in the temperature range of 70 to 180 °C before exposure. The light-sensitive material and the image-receiving material may be preliminary heated at the temperature of 80 to 250 °C immediately before heat development and transfer for enhancing mutual adhesion, as described in Japanese Unexamined Patent Publication No. 143338/1985 and Japanese Patent Application No. 3644/1985.

As a heating means, there may be used all mehtods available for the usual heat-developable light-sensitive material, for example, bringing it contact with heated block or plate; bringing it contact with heat roller or heat drum; passing it through an atmosphere of high temperature; employing heating with use of high frequency wave; and further providing an electrically conductive layer containing electrically conductive substance such as carbon black on the back of the light-sensitive material of this invention or on the back of the image-receiving member for heat development and using joule heat produced by feeding electricity to the conductive layer.

The image-receiving material can be obtained by coating polymer for fixing the heat transferable dyes moved by diffusion from the heat-developable light-sensitive material in the above light-sensitive material or on a support such as paper or other synthetic polymer sheet, etc.

As the image-receiving layer of the iamge-receiving material usefully used, it is sufficient to have functions of receiving dyes in the heat-developable layer released or formed by heat development, and may preferably be used those composed of heat resistance organic polymer substances having a glass transition temperature of 40 °C or more and 250 °C or less as described in Japanese Unexamined Patent Publication No. 207250/1982.

Particularly preferable image-receiving layer may include the layer composed of vinyl polychloride as described in Japanese Unexamined Patent Publication No. 223425/1984 and the layer composed of polycarbonate and a plasticizer as described in Japanese Unexamined Patent Publication No. 19138/1985.

The support may be made to serve as an image-receiving layer by using these polymers. In this instance, the support may be composed of single layer or many layers.

The other examples of the preferred image-receiving layer my include those described in US Patent 3,709,690 which is a polymer containing tertially amine or quaternary ammonium salt. The polymer may include a polymer containing ammonium salt, a polymer containing tertially amine and the like. Typical image-receiving layer for diffusion transfer may include those obtained by mixing a polymer containing ammonium salt, tertially amine or the like with gelatin, polyvinyl alcohol, etc. and coating it on a support.

As a support for the light-sensitive material and the image-receiving material, any of transparent support, opaque support and the like may be used, and there may be exemplified a support of polyethyleneterephthalate, etc. and a support containing pigments such as titanium oxide therein; and baryta paper, RC paper which is laminated with thermalplastic resin containing pigments on a paper; coat paper, cloth paper, glasses and metals such as aluminum, a support which is obtained by coating electron radiation curable resin composition containing pigments on these supports and curing it, or a support provided with a coating layer containing pigments on these supports, and the like.

Next, the embodiment of image outputting may include other various embodiments, for example, a color copying machine, a color printer, a duplicating machine (extra printing) machine, a color proof system for outputting original or resolved film of printing having been read (tone-checking system), a video printer which outputs video signals, etc.

As described above, since the color image forming apparatus of this invention uses yellow light in place of blue light among plural lights for exposure without using blue light, stable and compact light source can be used as a light source to be combined with other light sources for image forming, the light source becomes to be long life, in addition, combining with a heat-developable light-sensitive material, the apparatus becomes small and low in cost and the formed image outputted from the computer becomes high in quality, etc.

## Claims

1. An apparatus for forming a color image which forms color image by modulating beams of light having different wavelength from plural light sources with use of image signal respectively, conducting a scanning exposure on a light-sensitive material by use of the modulated beams of light to form a latent image thereon and developing the latent image, wherein the light-sensitive material is a heat-developable light-sensitive material, the latent image is developed by heat developing treatment, the maximum intensity wavelength ($\lambda$max) of spectral distribution of the light intensity of one of the light sources is 560 nm $\leq$ $\lambda$max $\leq$ 620 nm, and the half width (W) of the spectral distribution is W $\leq$ 20 nm.

2. The apparatus for forming a color image according to Claim 1, wherein the light source having the maximum intensity wavelength ($\lambda$max) of spectral distribution of the light intensity in the range of 560 nm $\leq$ $\lambda$max $\leq$ 620 nm, and the half width (W) of the spectral distribution in the range of W $\leq$ 20 nm is a laser.

3. The apparatus for forming a color image according to Claim 1, wherein the light source having the maximum intensity wavelength ($\lambda$max) of spectral distribution of the light intensity in the range of 560 nm $\leq$ $\lambda$max $\leq$ 620 nm, and the half width (W) of the spectral distribution in the range of W $\leq$ 20 nm is a He-Ne gas laser.

4. The apparatus for forming a color image according to Claim 1, wherein at least two of the light sources are He-Ne gas lasers.

5. The apparatus for forming a color image according to Claim 1, wherein all of the light sources are He-Ne gas lasers.

6. The apparatus for forming a color image according to Claim 1, wherein the heat-developable light-sensitive material comprises plural light-sensitive layers containing a dye providing substance and a silver halide emulsion, and one of the light-sensitive layers has been subjected to spectral sensitization so that the maximum intensity wavelength ($\lambda$max) of spectral distribution of the layer is in the range of 560 nm $\leq$ $\lambda$max $\leq$ 620 nm.

7. The apparatus for forming a color image according to Claim 1, wherein the apparatus comprises a unit structure having an optical system connected by optical fibers.

8. The apparatus for forming a color image according to Claim 7, wherein the unit structure comrises a light source unit which emits beams of light of plural colors, an optical modulating unit and a beam synthesizing unit.

9. The apparatus for forming a color image according to Claim 7, wherein the unit structure comrises a light source unit which emits beams of light of plural colors, a light-source-stabilizing unit, an optical modulating unit and an optical beam synthesizing unit.

10. The apparatus for forming a color image according to Claim 7, wherein the unit structure comprises a unit composed of a light source section, a light-source-stabilizing section and an optical modulating section, and an optical beam synthesizing unit.

11. The apparatus for forming a color image according to Claim 1, wherein the scanning is carried out by use of a linear motor.

12. The apparatus for forming a color image according to Claim 11, wherein a primary scanning of the scanning is carried out by the rotation of a drum on which the heat-developable light-sensitive material is rolled around and a secondary scanning of the scanning is carried out by the movement of the drum by use of the linear motor or the movement of an optical system by use of the linear motor.

13. The apparatus for forming a color image according to Claim 11, wherein a primary scanning of the scanning is carried out by use of a polygon or a galvanometer and a secondary scanning of the scanning is carried out by the movement of the heat-developable light-sensitive material by use of a linear motor or the movement of an optical system by use of a linear motor.

14. An image forming system which forms color image by modulating beams of light having different wavelength from plural light sources with use of image signal respectively, conducting a scanning exposure on a light-sensitive material by use of the modulated beams of light to form a latent image thereon and developing the latent image, wherein the light-sensitive material is a heat-developable light-sensitive material, the latent image is developed by heat developing treatment, the maximum intensity wavelength ($\lambda$max) of spectral distribution of the light intensity of one of the light sources is 560 nm $\leq$ $\lambda$max $\leq$ 620 nm, and the half width (W) of the spectral distribution is W $\leq$ 20 nm.

15. The image forming system according to Claim 14, wherein the system comprises a rewritable recording means for recording look up table for image data conversion and an interface for conducting connection with an outer signal for rewriting the look up table recorded in the rewritable recording means.

16. The image forming system according to Claim 14, wherein the outer signal is a signal from a computer.

17. The image forming system according to Claim 14, wherein the system comprises a rewritable recording means for recording a look up table for image data conversion and a computer connected to the recording means for rewriting the look up table recorded in the recording means.

FIG. 1

FIG. 2

Digital color image signal

FIG. 3

Blue
data

Green
data

Red
data

Digital color image signal

FIG. 4

Blue     Green    Red
data     data     data

Digital color image signal

FIG. 5

Digital color image signal

FIG. 6

Digital color image signal

Red data

Green data

Blue data

Personal computer

FIG. 7

FIG. 8

Red data

Green data

Blue data

Digital color image signal

Personal computer

FIG. 9

Digital color image signal